# EUROPEAN PATENT APPLICATION

(11) **EP 4 603 985 A1**
(43) Date of publication of application: **20.08.2025**
(21) Application number: 25182939.6
(22) Date of filing: 16.06.2025
(51) Int. Cl.: G06F 16/16, G06F 16/74, G06F 16/93

(54) **ONLINE FILE EDITING METHOD, APPARATUS, ELECTRONIC DEVICE, STORAGE MEDIUM AND PRODUCT**

(30) Priority: 09.12.2024 CN 202411805402
(71) Applicant: Beijing Baidu Netcom Science Technology Co., Ltd., Beijing 100085 (CN)
(72) Inventor: ZOU, Hongtao, Beijing, 100085 (CN)
(74) Representative: Maiwald GmbH

(57) **Abstract**

An online file editing method, performed by a client, includes: in response to an opening request for a target file, sending a data acquisition request for the target file to a server; receiving a data entity of the target file returned by the server, wherein the data entity comprises a plurality of pieces of log data; loading the data entity in a preset web view container, and displaying a web view loaded with the data entity; and receiving an editing instruction for the web view, displaying response result data in the web view in response to the editing instruction, and sending the response result data to the server for the server to update the data entity of the target file according to the response result data.

## Description

### TECHNICAL FIELD

The invention relates to the computer technical field, more particularly, to technical fields of file processing, file editing, artificial intelligence (AI) and the like, and especially to an online file editing method, an apparatus, an electronic device, a storage medium and a product.

### BACKGROUND

With the rapid development of computer technology, online file editing has emerged in order to facilitate file editing and sharing. Online file editing can be realized by using an online editing function of an application, editing via a third-party application, or downloading the file for local editing.

### SUMMARY

The invention provides an online file editing method, an apparatus, an electronic device, a storage medium and a product. The invention is defined by the appended claims.

According to a first aspect of the invention, an online file editing method is provided. The method is performed by a client, and includes:
in response to an opening request for a target file, sending a data acquisition request for the target file to a server;
receiving a data entity of the target file returned by the server, in which the data entity includes a plurality of pieces of log data;
loading the data entity in a preset web view container, and displaying a web view loaded with the data entity; and
receiving an editing instruction for the web view, displaying response result data in the web view in response to the editing instruction, and sending the response result data to the server for the server to update the data entity of the target file according to the response result data.

According to a second aspect of the invention, an online file editing method is provided. The method is applied to a server, and includes:
receiving a data acquisition request for a target file sent by a client, in which the data acquisition request includes a user identifier (ID) and a file ID of the target file;
determining a data entity corresponding to the target file based on the user ID, the file ID, and a correspondence relationship among the user ID, the file ID and a data ID of the data entity, in which the data entity includes a plurality of pieces of log data;
sending the data entity to the client; and
receiving response result data sent by the client, and updating the data entity corresponding to the target file by using the response result data.

According to a third aspect of the invention, an online file editing apparatus is provided. The apparatus is configured on a client, and includes:
a first request sending module, configured to, in response to an opening request for a target file, send a data acquisition request for the target file to a server;
a data obtaining module, configured to receive a data entity of the target file returned by the server, in which the data entity includes a plurality of pieces of log data;
a data loading module, configured to load the data entity in a preset web view container, and display a web view loaded with the data entity; and
an online editing module, configured to, receive an editing instruction for the web view, display response result data in the web view in response to the editing instruction, and send the response result data to the server for the server to update the data entity of the target file according to the response result data.

According to a fourth aspect of the invention, an online file editing apparatus is provided. The apparatus is configured on a server, and includes:
a first request receiving module, configured to receive a data acquisition request for a target file sent by a client, in which the data acquisition request includes a user ID and a file ID of the target file;
a data determining module, configured to determine a data entity corresponding to the target file based on the user ID, the file ID, and a correspondence relationship among the user ID, the file ID and a data ID of the data entity, in which the data entity includes a plurality of pieces of log data;
a data sending module, configured to send the data entity to the client; and
a data updating module, configured to receive response result data sent by the client, and update the data entity corresponding to the target file by using the response result data.

According to a fifth aspect of the invention, an electronic device is provided. The device includes:
at least one processor; and
a memory communicatively connected to the at least one processor;
in which the memory stores instructions executable by the at least one processor, and when the instructions are executed by the at least one processor, the at least one processor is caused to perform any of the methods described above.

According to a sixth aspect of the invention, a non-transitory computer readable storage medium is provided. The medium stores computer instructions, which are used to cause a computer to perform any of the methods described above.

According to a seventh aspect of the invention, a computer program product is provided. The product includes computer programs, and when the computer programs are executed by a processor, any of the methods described above can be performed.

According to the embodiment of the invention, online file editing is realized.

It should be understood that the content described in the section is not intended to identify key or important features of the embodiments of the invention, nor is it intended to limit the scope of the invention. Additional features of the invention will be easily understood from the following description.

### BRIEF DESCRIPTION OF THE DRAWINGS

The accompanying drawings are used to better understand the solution and do not constitute a limitation to the invention, in which:
FIG. 1 is a schematic diagram of a network disk interface according to an embodiment of the invention.
FIG. 2 is a schematic diagram of a file creation method according to an embodiment of the invention.
FIG. 3 is a schematic diagram of an online file editing method according to an embodiment of the invention.
FIG. 4 is a schematic diagram of an online file editing interface according to an embodiment of the invention.
FIG. 5 is a schematic diagram of a video display interface according to an embodiment of the invention.
FIG. 6a is a schematic diagram of a file editing interface according to an embodiment of the invention.
FIG. 6b is a schematic diagram of a file editing interface according to another embodiment of the invention.
FIG. 6c is a schematic diagram of a file editing interface according to yet another embodiment of the invention.
FIG. 7a is a schematic diagram of an artificial intelligence (AI) editing interface according to an embodiment of the invention.
FIG. 7b is a schematic diagram of an AI editing interface according to another embodiment of the invention.
FIG. 7c is a schematic diagram of an AI editing interface according to yet another embodiment of the invention.
FIG. 8 is a schematic diagram of an online file editing method according to an embodiment of the invention.
FIG. 9 is an interactive schematic diagram of an online file editing method according to an embodiment of the invention.
FIG. 10 is a structural diagram of an online file editing apparatus according to another embodiment of the invention.
FIG. 11 is a structural diagram of an online file editing apparatus according to another embodiment of the invention.
FIG. 12 is a block diagram of an electronic device configured to implement an online file editing method of an embodiment of the invention.

### DETAILED DESCRIPTION

Exemplary embodiments of the invention are described below with reference to the accompanying drawings, in which various details of the embodiments of the invention are included to facilitate understanding, and they should be considered as exemplary only. For clarity and brief, descriptions of well-known functions and structures are omitted in the following descriptions.

In related arts, file products used in online file editing tools, such as Tencent Docs, Youdao Cloud Notes, EverNote, etc., exist as standalone files, and can only be edited by using local resources during file editing. In practical application, for network disks, there are a large number of demands from network disk users for creation or reproduction based on data within the network disk. In order to better meet the creation demands of network disk users within the network disk, how to realize online file editing in the network disk has become a problem to be solved urgently.

In order to better meet the creation demands of the network disk users within the network disk and enable the users to perform the online file editing in the network disk, the embodiments of the invention provides an online file editing method, an apparatus, an electronic device, a storage medium and a product.

According to the online file editing method provided by the embodiments of the invention, in response to an opening request for a target file, a client sends a data acquisition request for the target file to a server and receives a data entity of the target file returned by the server, in which the data entity includes a plurality of pieces of log data. The data entity is loaded in a preset web view container, and a web view loaded with the data entity is displayed. The client receives an editing instruction for the web view, displays response result data in the web view in response to the editing instruction and sends the response result data to the server for the server to update the data entity of the target file according to the response result data.

In the embodiments of the invention, the data entity corresponding to the target file existing in the client is stored in the server. The client pulls the corresponding data entity from the server according to the opening request of the target file, loads the pulled data entity in a preset web view container on the client, and displays the web view loaded with the data entity to form an online editable file. That is, the displayed web view is a file view that users can see on the client and can edit online. In response to the editing instruction for the web view, the client displays the response result data in the web view, and uses the response result data to synchronize the data entity stored in the server, so as to realize online file editing.

The online file editing method provided by the embodiments of the invention will be described in detail below. It should be noted that the term "file" mentioned in this invention can also be referred to as "document", which may include data collections in any format such as text, icons, videos, and images. The wording "editing a file" means, for example, editing and modifying any content of the file.

The online file editing method provided by the embodiments of the invention can be applied to scenarios of online file editing in the network disk. In one example, a user logs in to a personal network disk through a client, and then interacts with data via a network connection between the client and the server to realize online file editing. For example, the client may be a terminal such as a laptop and a personal computer, or a smart terminal. The server may be an online service device such as a network disk cloud, a network disk backend or a network disk database.

In a condition where a user needs to perform a creation within a network disk, for example, editing a file in the network disk, the user logs in to its personal network disk through the client. At this time, a connection relationship between the client and the network disk backend (i.e., the server) is established. The client may be a laptop, a personal computer or a mobile phone.

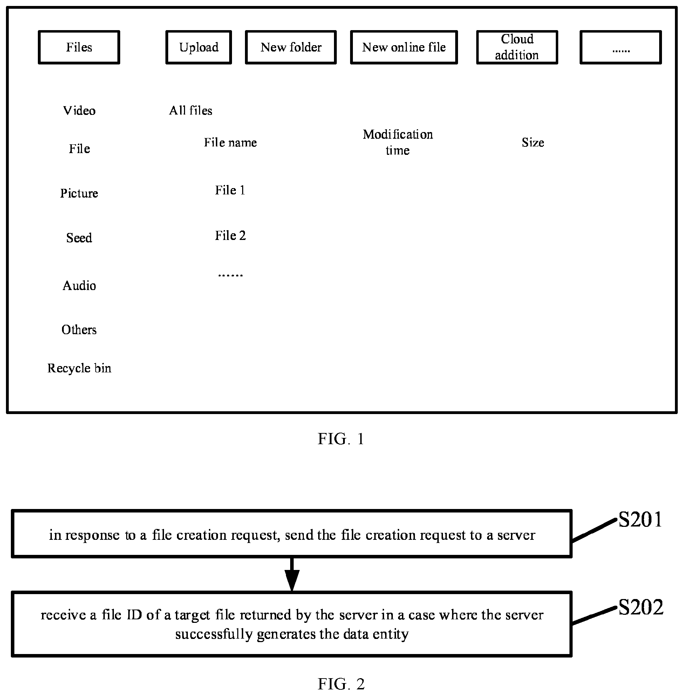

For example, as illustrated in FIG. 1, FIG. 1 illustrates an exemplary interface of a personal network disk displayed after a user logs in the personal network disk via a client. Before performing online file editing, the user needs to create or new an online file. For example, the user clicks a new online file function control in FIG. 1 to create a new online file.

Correspondingly, as illustrated in FIG. 2, the embodiments of the invention provides an online file editing method. The method is performed by a client, and includes the following steps.

At step S201, in response to a file creation request, the file creation request is sent to a server.

At step S202, a file identifier (ID) of a target file, returned by the server in a case where the server successfully generates a data entity, is received.

For example, a user clicks the new online file function control in FIG. 1. The client receives the file creation request from the user, in which the file creation request contains a user ID. The client sends the file creation request to the server in response to the file creation request. When the server receives the file creation request sent by the client, the server generates the data entity corresponding to the file creation request and stores the data entity in a target database (which may be a network disk database) while generating a target file of a preset file type for the data entity and storing the target file in a preset position. The preset position may be a personal network disk storage space corresponding to the user ID. The server allocates a data ID to the data entity and a file ID to the target file, establishes and stores a correspondence relationship among the user ID, the file ID and the data ID, and returns a message of successful creation and the file ID of the generated target file to the client in a case where the data entity and the target file are successfully generated.

The data entity may contain a plurality of pieces of log data of the target file, such as creation time, size, content, etc. The preset file type may be, for example, a pnad file type, which is represented by "xxx.pand", where "xxx" is a file name, and ".panda" represents the pnad file type. This file type may be understood as a file type similar to shortcut and application avatar type. Therefore, in a case where the target file is successfully generated by the server, the client will display the corresponding target file, which occupies the storage space of the personal network disk of the user.

The target file is a file of the preset file type generated for the data entity. Correspondingly, there is a mapping relationship between the generated data entity and the target file, and the server also establishes and stores the correspondence relationship among the user ID, the file ID and the data ID, so that the client can trace back to the data entity corresponding to the server via the file ID of the target file.

In this way, in a case where the client receives the file creation request, the data entity corresponding to the file creation request is generated in the server via interactions between the client and the server, and the target file displayed at the client is generated. The target file of the client can be directly associated with the data entity of the server, so as to facilitate subsequent online file editing.

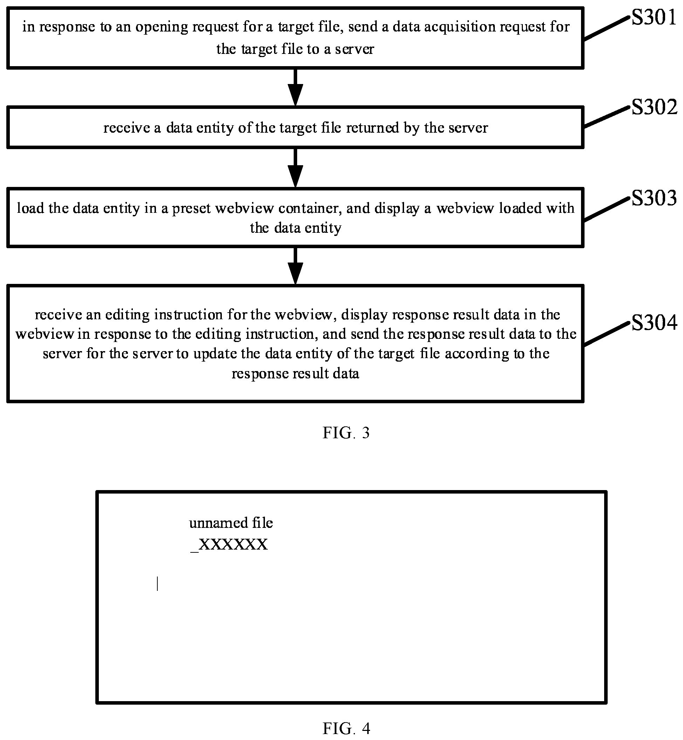

FIG. 3 is a flowchart of an online file editing method according to an embodiment of the invention. The method is performed by a client, and includes the following steps.

At step S301, in response to an opening request for a target file, a data acquisition request for the target file is sent to a server.

In a case where the target file already exists, since a data entity corresponding to the target file is stored in the server, it is necessary to pull the data entity from the server for rendering when opening the target file.

In detail, a user clicks on the target file to open it, and the client receives the opening request for the target file from the user. In response to the opening request, the client sends the data acquisition request for the target file to the server. The data acquisition request may include a user ID and a file ID of the target file, so as to pull the corresponding data entity from the server.

At step S302, a data entity of the target file returned by the server is received.

When the server receives a file creation request and generates the data entity and the target file, the server establishes and stores a correspondence relationship among a user ID contained in the file creation request, a file ID of the generated target file and a data ID of the generated data entity. Subsequently, when the server receives the data acquisition request sent by the client, the server can obtain the corresponding data entity by querying the above correspondence relationship according to the user ID contained in the data acquisition request and the file ID of the target file, and return the data entity of the target file to the client.

The data entity contains a plurality of pieces of log data, and each piece of log data represents an operation record for the target file. For example, the log data corresponding to a newly generated target file has empty file content, but the log data corresponding to the target file that has undergone one editing operation contains information such as an editing content and an editing time, and so on.

At step S303, the data entity is loaded in a preset web view container, and a web view loaded with the data entity is displayed.

After obtaining the data entity of the target file from the server, the client renders the obtained data entity in a file form within a preset web view container. After the rendering is completed, the client displays the web view loaded with the data entity to form an online editable file. The preset web view container may be, for example, a Webview. After rendering in the file form, the displayed web view takes the form of a file. Data contents contained in the web view are data contents in the data entity.

For example, as illustrated in FIG. 4, FIG. 4 illustrates a web view that displays a loaded data entity, and there are no contents edited in an editing interface of the web view.

At step S304, an editing instruction for the web view is received, response result data is displayed in the web view in response to the editing instruction, and the response result data is sent to the server for the server to update the data entity of the target file according to the response result data.

When receiving the editing instruction from the user for the web view, the client responds by displaying the response result data in the web view, and synchronizes the response result data with the data entity of the target file on the server.

In detail, the response result data can be sent to the server in real time or periodically, so that the server can perform the data synchronization.

In the embodiments of the invention, the data entity corresponding to the target file existing in the client is stored in the server. The client pulls the corresponding data entity from the server via the opening request of the target file, loads the pulled data entity in the preset web view container of the client, and displays the web view loaded with the data entity to form the online editable file. That is, the displayed web view is a file view that the user can see on the client and can edit online Additionally, in response to the editing instruction for the web view, the client displays the response result data in the web view, and synchronizes the response result data with the data entity stored on the server, so as to realize the online file editing. Because the web view is edited on the client, while the corresponding data entity is stored on the server, the client can pull data from the server, so as to comprehensively use data on the server and local data during the process of file editing, which can better meet the creation demands of the network disk user within the network disk and enable the user to better use the data in the network disk for online file editing.

In a possible implementation, the above online file editing method can be applied to scenarios where online notes are added or edited while watching a video. Correspondingly, in response to the file creation request, sending the file creation request to the server can includes:
for a video being watched by a user, receiving a triggering operation of the user for a preset function in a preset function area of a video display interface, and generating the file creation request for the watched video; and
in response to the file creation request, sending the file creation request to the server, wherein the file creation request further includes a video ID.

The preset function area can be positioned at a setting position within the video display interface, such as a left sidebar, a right sidebar, a top bar or a bottom bar, etc. The preset function area can also be collapsible, e.g., hidden when the user clicks a "collapse" button, or displayed when the user clicks a "display" button. The preset function may include an Add-Notes function, a text creation function, etc.

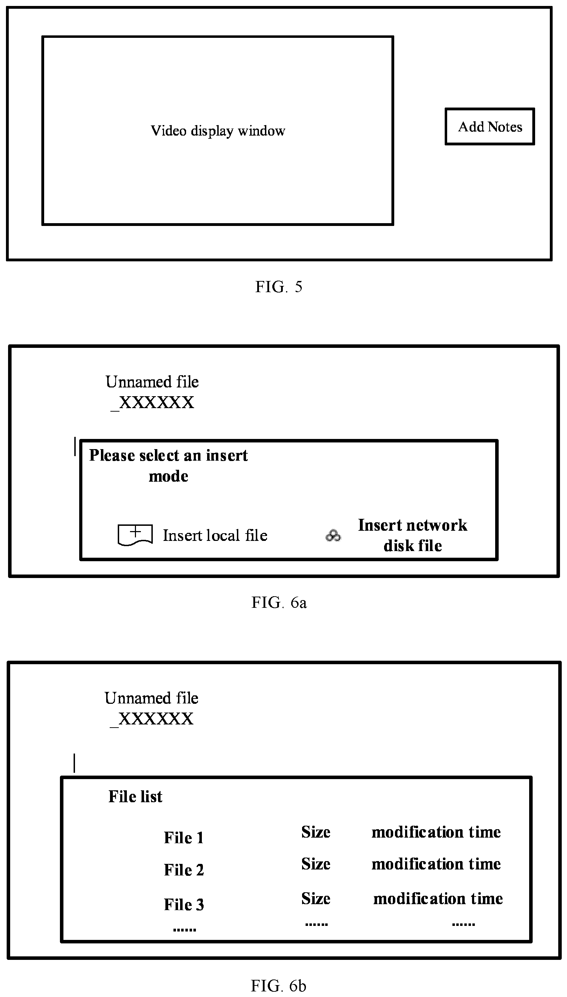

For example, as illustrated in FIG. 5, a user is watching a video played in a video display window. When intending to add a note for the watched video, the user clicks an "Add Notes" function button/control on the right sidebar. When the client receives a triggering operation of the user on the "Add Notes" function button, the client generates the file creation request for the watched video, and sends, in response to the file creation request, the file creation request containing the user ID and the video ID to the server, so that the server can generate the corresponding data entity and the target file, and return the file ID of the target file. In the scenario of adding or editing online notes for the watched video, the target object is the video. Processes of generating a specific data entity and a target file, as well as a subsequent note editing operation are consistent with the above-mentioned online file editing process.

In the embodiments of the invention, the function of adding video notes is realized for the video being watched by the user. When the user triggers the "Add Notes" function button, the online note can be added and edited during watching the video, which helps the user record the video note while watching the video, and realizes an integration of a video function and a file editing function.

In a possible implementation, the above editing instruction may include at least one of: an instruction for inserting attachments, an instruction for modifying content or an artificial intelligence (AI) editing instruction.

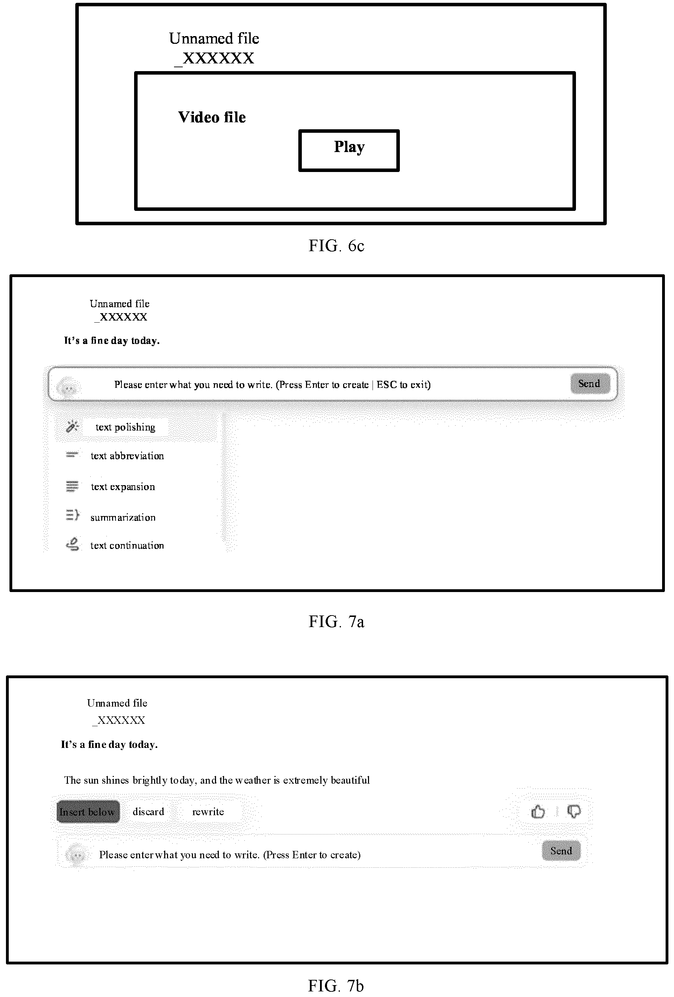

The instruction for inserting attachments can indicate to insert a local file or a network disk file. For example, as illustrated in FIG. 6a, when a user clicks an "insert" button (not shown in FIG. 6a) on an online file editing interface (i.e., web view), a "Please select an insert mode" dialog box pops up for the user to select an insert mode. After the user selects an insert mode, a dialog box for the user to select an insert file is displayed as shown in FIG. 6b. After the user selects a target file to be inserted, in response to an insert instruction, response result data is displayed in the web view. For example, as illustrated in FIG. 6c, a video file is inserted. The response result data is then sent to the server, so that the server can synchronize and update the data entity. After inserting the file, the user can browse or preview the inserted file, for example, by clicking a "play" button in FIG. 6c to preview the inserted video.

The instruction for modifying content can indicate to write contents, delete or modify written content, etc. AI editing is to realize an AI-assisted editing function.

In the embodiments of the invention, the editing instruction includes the instruction for inserting attachments, the instruction for modifying content, and the AI editing instruction, etc., realizing various editing modes for the online file. By comprehensively using the data on the server and the local data, the creation demands of network disk users within the network disk can be better met, achieving a write-while-watch function.

In a possible implementation, when the editing instruction is the AI editing instruction, receiving the editing instruction for the web view, displaying the response result data in the web view in response to the editing instruction, and sending the response result data to the server in the above step S304, include:
receiving the AI editing instruction for the web view, and displaying a display interface containing a plurality of AI editing functions; obtaining a selection instruction from a user for the AI editing function, and obtaining and displaying AI response data by calling a corresponding functional interface according to a selection result; and in a case of receiving an instruction from the user to confirm use of the AI response data, displaying the AI response data in the web view, and sending the AI response data to the server.

For example, as illustrated in FIG. 7a, after a user editing "it's a fine day today" in an editing interface of the web view, a user clicks an "AI editing function" button (not shown in FIG. 7a), and a client receives an AI editing instruction for the web view and displays a display interface containing a plurality of AI editing functions.

The AI editing function includes at least one of: outline writing, brainstorming, text polishing, text abbreviation, text continuation, text expansion or summarization.

In the embodiments of the invention, the AI editing function can assist users in creating files from scratch, for example, writing outlines, brainstorming, etc. Additionally, the AI editing function can also help users polish, abbreviate, continue, expand or summarize the created contents, to better assist the users in their creation.

When the user selects a specific AI editing function, the client obtains a selection instruction from the user for the AI editing function, and calls a corresponding function interface according to a selection result to obtain AI response data and display the AI response data. Different AI editing functions correspond to different functional interfaces, and each functional interface is encapsulated with an add-in function for realizing corresponding functional operations.

For example, as illustrated in FIG. 7b, after the user selects the function of text polishing, the client calls a functional interface corresponding to the text polishing to obtain AI response data, e.g., "The sun shines brightly today, and the weather is extremely beautiful", and displays the AI response data.

Subsequently, the user determines whether to use the AI response data. When the client receives an instruction from the user to confirm use of the AI response data, the client displays the AI response data in the web view and sends the AI response data to the server.

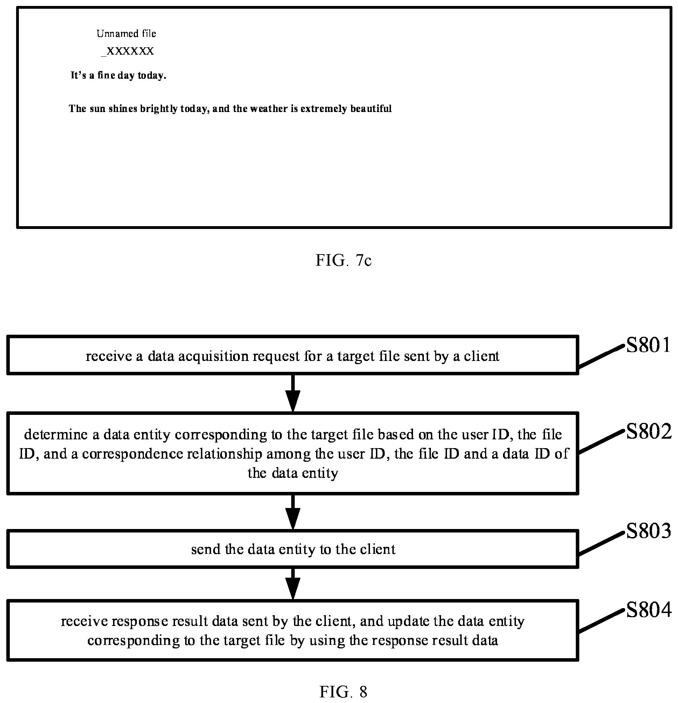

For example, when the user chooses to use the AI response data and specifies the usage mode as "insert below", the client receives the instruction from the user to confirm the use of the AI response data and insert the AI response data below, then displays the AI response data in the web view, as shown in FIG. 7c.

The embodiments of the invention realizes the AI editing function of online file editing, which helps users create files from scratch, and also help the users polish, abbreviate, continue, expand or summarize the created contents, to better assist the users in their creation.

In a possible implementation, the AI editing instruction may be a text instruction or a voice instruction. In a case where the AI editing instruction is the voice instruction, the method further includes: performing intention recognition on the voice instruction, and determining a result of the intention recognition as the AI editing instruction.

The AI editing instruction may be an instruction manually selected or input by a user, i.e. a text instruction, or the AI editing instruction may be a voice instruction. When the AI editing instruction is the voice instruction, the client can also perform the intention recognition on received voice instruction, and determine the result of the intention recognition as the AI editing instruction.

In the embodiments of the invention, the AI editing instruction may be the text instruction or the voice instruction, which can expand the AI editing functions of online file editing, and perform the intention recognition on received voice instruction, thus better assisting the users in their creation.

In the embodiments of the invention, the client can pull the data entity corresponding to the target file from the server by clicking the target file, render and display the web view loaded with the data entity locally on the client, and perform online file editing via the web view. Regardless of whether the file is edited or not, the target file will be displayed locally on the client after the target file is generated. The local target file on the client does not have a specific data entity, and its corresponding data entity is stored in the server. The embodiments of the invention also provides a method for operating the target file. In detail, on the basis of the above method, the method also includes:
in response to an operation instruction for the target file, sending the operation instruction to the server, in which the operation instruction includes an operation ID of an operation performed for the target file; and
receiving result information returned by the server in a case of the server responding to the operation instruction by calling a corresponding operation interface based on the operation ID.

The client receives and responds to the operation instruction from the user for the target file, and sends the operation instruction to the server. The operation instruction contains the operation ID of the operation performed on the target file, and the operation ID may be a copy ID, a delete ID, a move ID and the like. The server responds to the operation instruction by calling the corresponding operation interface based on the operation ID and then returns the response result information to the client. The client receives the result information returned by the server. The server stores operation interfaces corresponding to different operation IDs, and each operation interface is encapsulated with an add-in function for realizing the corresponding operation. The result information returned by the server may be, for example, information indicating a successful operation, information indicating a failed operation, as well as a prompt or an indicator that indicates the next operation.

In the embodiments of the invention, operations on the target file of the data entity stored in the server can be realized.

The operation instruction includes at least one of: downloading, sharing, transferring, exporting, printing, moving, copying, favoriting or deleting.

In the embodiments of the invention, diversified operations on the target file of the data entity stored in the server can be realized.

As illustrated in FIG. 8, FIG. 8 is a schematic diagram of an online file editing method according to another embodiment of the invention. The method is applied to a server, and includes the following steps.

At step S801, a data acquisition request for a target file sent by a client is received.

The data acquisition request contains a user ID and a file ID of the target file.

At step S802, a data entity corresponding to the target file is determined based on the user ID, the file ID, and a correspondence relationship among the user ID, the file ID and a data ID of the data entity.

The data entity includes a plurality of pieces of log data.

At step S803, the data entity is sent to the client.

At step S804, response result data sent by the client is received, and the data entity corresponding to the target file is updated by using the response result data.

In the embodiments of the invention, the data entity corresponding to the target file existing in the client is stored in the server. The client pulls the corresponding data entity from the server according to the opening request of the target file, loads the pulled data entity in the preset web view container of the client, and displays the web view loaded with the data entity to form an online editable file. The client sends the response result data corresponding to the editing instruction for the web view to the server, and the server can synchronize and update the stored data entity by using the response result data, thus realizing the online file editing. Because the web view is edited at the client and the corresponding data entity is stored at the server, the client can pull data from the server, so as to comprehensively use data on the server and local data during the process of file editing, which can better meet the creation demands of the network disk user within the network disk and enable the user to better use the data in the network disk for online file editing.

In a possible implementation, the method includes:
receiving the file creation request sent by the client, in which the file creation request includes a user ID;
generating the data entity corresponding to the file creation request, and storing the data entity in a target database;
generating a target file of a preset file type for the data entity, and storing the target file in a preset position;
allocating the data ID for the data entity and the file ID for the target file, establishing and storing the correspondence relationship among the user ID, the file ID and the data ID; and
in a case where n the data entity and the target file are successfully generated, returning the file ID of the target file to the client.

In a case where a network connection between the client and the server is disconnected or a capacity of a cloud disk corresponding to the server is insufficient, the server fails to generate the data entity and the target file, and returns a creation failure message to the client.

In the embodiments of the invention, the data entity corresponding to the file creation request is generated at the server through interactions between the client and the server. The target file displayed at the client is generated, which can be directly associated with the data entity at the server, so as to facilitate subsequent online file editing.

In a possible implementation, receiving the file creation request sent by the client, includes: receiving the file creation request for a watched video sent by the client, in which the file creation request further includes a video ID.

Correspondingly, establishing and storing the correspondence relationship among the user ID, the file ID and the data ID, includes: establishing and storing a correspondence relationship among the user ID, the video ID, the file ID and the data ID.

Storing the target file in the preset position, includes: storing the target file in a storage directory of the watched video.

In the embodiment of the invention, a function of adding video notes is realized for the video being watched by the user. When the user triggers an "Add Notes" button, the online note can be added and edited during watching the video, which can help the user to record the video note while watching the video, and realizes an integration of a video function and a file editing function. The target file is stored in the storage directory of the watched video for better management of the video and the video note.

In a possible implementation, the method further includes:
receiving an operation instruction for the target file sent by the client, in which the operation instruction includes an operation ID of an operation performed on the target file; and
calling a corresponding operation interface based on the operation ID to respond to the operation instruction, and returning result information to the client.

In the embodiment of the invention, the operation on the target file of the data entity stored in the server is realized.

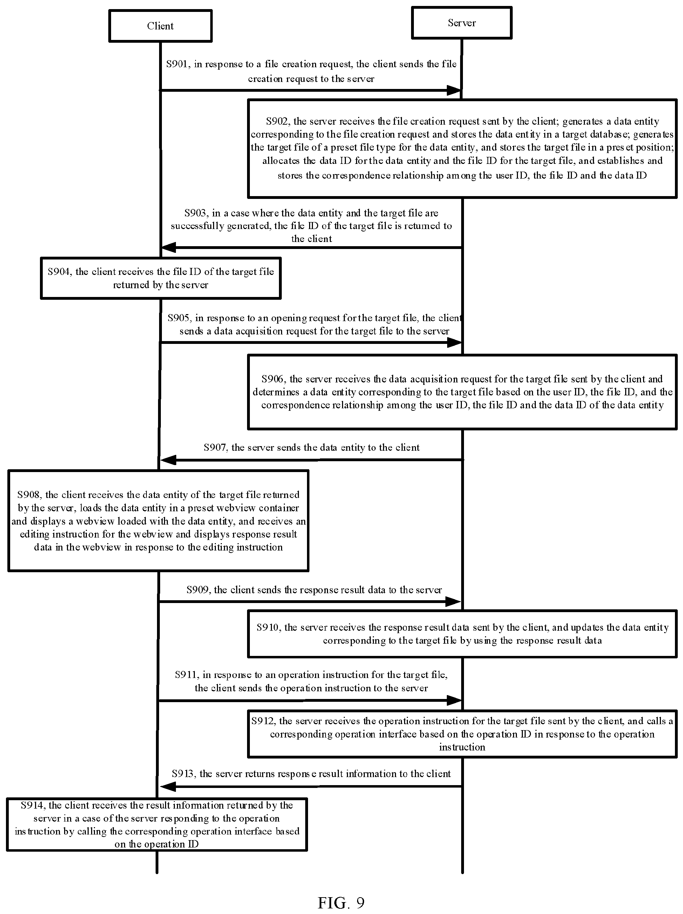

For example, as illustrated in FIG. 9, an online file editing method provided by an embodiment of the invention includes the following steps.

At step S901, in response to a file creation request, a client sends the file creation request to a server.

The file creation request contains a user ID.

In a scenario where a user is watching a video, for the video being watched by the user, the client may receive a triggering operation of the user for a preset function in a preset function area of a video display interface, and generate the file creation request for the watched video. The file creation request sent by the client to the server also includes a video ID.

At step S902, the server receives the file creation request sent by the client, generates a data entity corresponding to the file creation request and stores the data entity in a target database; generates a target file of a preset file type for the data entity, and stores the target file in a preset position; allocates a data ID for the data entity and a file ID for the target file, establishes and stores a correspondence relationship among the user ID, the file ID and the data ID.

At step S903, in a case where the data entity and the target file are successfully generated, the file ID of the target file is returned to the client.

When the user is watching the video, the file creation request received by the server also includes the video ID. After allocating the data ID to the data entity and the file ID to the target file, a correspondence relationship among the user ID, the video ID, the file ID and the data ID is established and stored. Storing the target file in the preset position includes storing the target file in a storage directory of the watched video.

At step S904, the client receives the file ID of the target file returned by the server.

At step S905, in response to an opening request for the target file, the client sends a data acquisition request for the target file to the server.

The data acquisition request contains the user ID and the file ID of the target file.

At step S906, the server receives the data acquisition request for the target file sent by the client and determines a data entity corresponding to the target file based on the user ID, the file ID, and the correspondence relationship among the user ID, the file ID and the data ID of the data entity.

The data entity includes a plurality of pieces of log data.

At step S907, the server sends the data entity to the client.

At step S908, the client receives the data entity of the target file returned by the server, loads the data entity in a preset web view container and displays a web view loaded with the data entity, and receives an editing instruction for the web view and displays response result data in the web view in response to the editing instruction.

The editing instruction includes at least one of: an instruction for inserting attachments, an instruction for modifying content or an AI editing instruction.

In a case where the editing instruction is the AI editing instruction, the client receives the AI editing instruction for the web view and displays a display interface containing a plurality of AI editing functions; obtains a selection instruction from the user for the AI editing function, obtains and displays AI response data by calling a corresponding functional interface according to a selection result; and in a case of receiving an instruction from the user to confirm a use the AI response data from the user, displays the AI response data in the web view and sends the AI response data to the server.

The AI editing instruction may be a text instruction or a voice instruction. In a case where the AI editing instruction is the voice instruction, the client performs intention recognition on the voice instruction and determines a result of the intention recognition as the AI editing instruction.

The AI editing function includes at least one of: outline writing, brainstorming, text polishing, text abbreviation, text continuation, text expansion or summarization.

At step S909, the client sends the response result data to the server.

At step S910, the server receives the response result data sent by the client, and updates the data entity corresponding to the target file by using the response result data.

At step S911, in response to an operation instruction for the target file, the client sends the operation instruction to the server.

The operation instruction contains an operation **ID** of an operation performed on the target file. The operation instruction includes at least one of: downloading, sharing, transferring, exporting, printing, moving, copying, favoriting or deleting.

At step S912, the server receives the operation instruction for the target file sent by the client, and calls a corresponding operation interface based on the operation ID to response to the operation instruction.

At step S913, the server returns response result information to the client.

At step S914, the client receives the result information returned by the server in a case of the server responding to the operation instruction by calling the corresponding operation interface based on the operation ID.

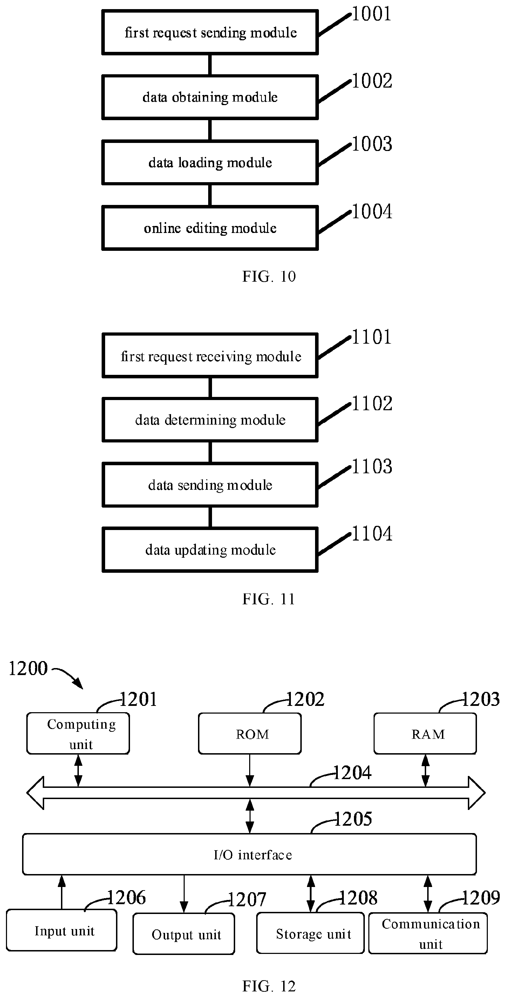

The embodiments of the invention also provides an online file editing apparatus, which is configured in a client. As illustrated in FIG. 10, the apparatus includes:
a first request sending module 1001, configured to, in response to an opening request for a target file, send a data acquisition request for the target file to a server;
a data obtaining module 1002, configured to receive a data entity of the target file returned by the server, in which the data entity includes a plurality of pieces of log data;
a data loading module 1003, configured to load the data entity in a preset web view container, and display a web view loaded with the data entity; and
an online editing module 1004, configured to, receive an editing instruction for the web view, display response result data in the web view in response to the editing instruction, and send the response result data to the server for the server to update the data entity of the target file according to the response result data.

In a possible implementation, the apparatus further includes:
a second request sending module, configured to, in response to a file creation request, send the file creation request to the server, in which the file creation request includes a user ID; and
an ID receiving module, configured to receive a file ID of the target file returned by the server in a case where the server successfully generates the data entity.

In a possible implementation, the second request sending module is further configured to:
for a video being watched by a user, receive a triggering operation of the user for a preset function in a preset function area of a video display interface, and generate the file creation request for the watched video; and
in response to the file creation request, send the file creation request to the server, in which the file creation request includes a video ID.

In a possible implementation, the editing instruction includes at least one of: an instruction for inserting attachments, an instruction for modifying content or an AI editing instruction.

In a possible implementation, in a case that the editing instruction is an AI editing instruction, the online editing module 1004 is further configured to:
receive the AI editing instruction for the web view, and display a display interface containing a plurality of AI editing functions;
obtain a selection instruction from a user for the AI editing function, obtain and display AI response data by calling a corresponding functional interface according to a selection result; and
in a case of receiving an instruction from the user to confirm use of the AI response data, display the AI response data in the web view and send the AI response data to the server.

In a possible implementation, the AI editing instruction is a text instruction or a voice instruction.

In response to the AI editing instruction being the voice instruction, the apparatus further includes:
an intention recognition module, configured to perform intention recognition on the voice instruction, and determine a result of the intention recognition as the AI editing instruction.

In a possible implementation, the AI editing function includes at least one of: outline writing, brainstorming, text polishing, text abbreviation, text continuation, text expansion or summarization.

In a possible implementation, the apparatus further includes:
an instruction sending module, configured to, in response to an operation instruction for the target file, send the operation instruction to the server, in which the operation instruction includes an operation ID of an operation performed on the target file; and
a result obtaining module, configured to receive result information returned by the server in a case of the server responding to the operation instruction by calling a corresponding operation interface based on the operation ID.

In a possible implementation, the operation instruction includes at least one of: downloading, sharing, transferring, exporting, printing, moving, copying, favoriting or deleting.

The embodiment of the invention also provides an online file editing apparatus, which is configured in a server. As illustrated in FIG. 11, the apparatus includes:
a first request receiving module 1101, configured to receive a data acquisition request for a target file sent by a client, in which the data acquisition request includes a user ID and a file ID of the target file;
a data determining module 1102, configured to determine a data entity corresponding to the target file based on the user ID, the file ID, and a correspondence relationship among the user ID, the file ID and a data ID of the data entity, in which the data entity includes a plurality of pieces of log data;
a data sending module 1103, configured to send the data entity to the client; and
a data updating module 1104, configured to receive response result data sent by the client, and update the data entity corresponding to the target file by using the response result data.

In a possible implementation, the apparatus further includes:
a second request receiving module, configured to receive the file creation request sent by the client, in which the file creation request includes a user ID;
a first generating module, configured to generate the data entity corresponding to the file creation request, and store the data entity in a target database;
a second generating module, configured to generate the target file of a preset file type for the data entity, and store the target file in a preset position;
a relationship establishing module, configured to allocate the data ID for the data entity and the file ID for the target file, establish and store the correspondence relationship among the user ID, the file ID and the data ID; and
an ID returning module, configured to, in a case where the data entity and the target file are successfully generated, return the file ID of the target file to the client.

In a possible implementation, the second request receiving module is configured to receive the file creation request for a watched video sent by the client, in which the file creation request includes a video ID.

The relationship establishing module is configured to establish and store a correspondence relationship among the user ID, the video ID, the file ID and the data ID.

The second generating module is configured to: generate the target file of the preset file type for the data entity, and store the target file in a storage directory of the watched video.

In a possible implementation, the apparatus further includes:
an instruction receiving module, configured to receive an operation instruction for the target file sent by the client, in which the operation instruction includes an operation ID of an operation performed on the target file; and
an instruction executing module, configured to call a corresponding operation interface based on the operation ID to respond to the operation instruction, and return result information to the client.

According to an embodiment of the invention, the invention also provides an electronic device, a readable storage medium and a computer program product.

The invention provides an electronic device, which includes:
at least one processor; and
a memory communicatively connected to the at least one processor;
in which the memory stores instructions executable by the at least one processor, and when the instructions are executed by the at least one processor, the at least one processor is caused to perform any of the methods of the invention.

The invention also provides a non-transitory computer readable storage medium. The storage medium stores computer instructions, which are used to cause a computer to perform any of the methods of the invention.

The invention also provides a computer program product, which includes computer programs. When the computer programs are executed by a processor, any of the methods of the invention is implemented.

In the technical solution of the invention, the collection, storage, usage, processing, transmission, provision and invention of user private information all comply with the provisions of relevant laws and regulations, and do not violate public order and good customs.

FIG. 12 is a block diagram of an electronic device 1200 that can be used to implement the embodiment of the invention. The electronic device is intended to represent various forms of digital computers, such as a laptop computer, a desktop computer, a workbench, a personal digital assistant, a server, a blade server, a mainframe computer and other suitable computers. The electronic device may also represent various forms of mobile devices, such as a personal digital processor, a cellular phone, a smart phone, a wearable device and other similar computing devices. The components shown here, their connections and relations, and their functions are merely exemplary, and are not intended to limit the implementation of the invention described and/or required herein.

As illustrated in FIG. 12, the device 1200 includes: a computing unit 1201 for performing various appropriate actions and processes based on computer programs stored in a Read-Only Memory (ROM) 1202 or computer programs loaded from a storage unit 1208 to a Random Access Memory (RAM) 1203. In the RAM 1203, various programs and data required for the operation of the device 1200 are stored. The computing unit 1201, the ROM 1202, and the RAM 1203 are connected to each other through a bus 1204. An input/output (I/O) interface 1205 is also connected to the bus 1204.

Components in the device 1200 are connected to the I/O interface 1205, including: an input unit 1206, such as a keyboard and a mouse; an output unit 1207, such as various types of displays and speakers; the storage unit 1208, such as a disk and an optical disk; and a communication unit 1209, such as network cards, modems, and wireless communication transceivers. The communication unit 1209 allows the device 1200 to exchange information/data with other devices through a computer network such as the Internet and/or various telecommunication networks.

The computing unit 1201 may be various general-purpose and/or dedicated processing components with processing and computing capabilities. Some examples of the computing unit 1201 include, but are not limited to, a Central Processing Unit (CPU), a Graphics Processing Unit (GPU), various dedicated AI computing chips, various computing units that run machine learning (ML) model algorithms, a Digital Signal Processor (DSP), and any appropriate processor, controller and microcontroller. The computing unit 1201 executes the various methods and processes described above, such as the online file editing method. For example, in some embodiments, each of the above methods may be implemented as a computer software program, which is tangibly contained in a machine readable medium, such as the storage unit 1208. In some embodiments, part or all of the computer programs may be loaded and/or installed on the device 1200 via the ROM 1202 and/or the communication unit 1209. When the computer program is loaded on the RAM 1203 and executed by the computing unit 1201, one or more steps of each of the above methods may be executed. Alternatively, in other embodiments, the computing unit 1201 may be configured to perform the above methods in any other suitable manner (for example, by means of firmware).

Various implementations of the systems and techniques described above may be implemented by a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), a computer hardware, a computer firmware and computer software, and/or any combination thereof. These implementations may be implemented in one or more computer programs, the one or more computer programs may be executed and/or interpreted on a programmable system including at least one programmable processor, which may be a dedicated or general programmable processor for receiving data and instructions from a storage system, at least one input device and at least one output device, and transmitting data and instructions to the storage system, the at least one input device and the at least one output device.

The program code configured to implement the method of the invention may be written in any combination of one or more programming languages. These program codes may be provided to the processor or controller of a general-purpose computer, a dedicated computer, or other programmable data processing devices, so that when the program code is executed by the processor or controller, the functions/operations specified in the flowchart and/or block diagram can be implemented. The program code may be executed entirely on the machine, partly executed on the machine, partly executed on the machine and partly executed on the remote machine as an independent software package, or entirely executed on the remote machine or server.

In the context of the invention, a machine readable medium may be a tangible medium that may contain or store a program for use by or in combination with an instruction execution system, an apparatus, or a device. The machine readable medium may be a machine readable signal medium or a machine readable storage medium. The machine readable medium may include, but is not limited to, an electronic, magnetic, optical, electromagnetic, infrared, or semiconductor system, apparatus or device, or any suitable combination of the above. More specific examples of the machine readable storage medium include electrical connections based on one or more wires, portable computer disks, hard disks, RAMs, ROMs, Electrically Programmable Read-Only-Memories (EPROMs) or flash memories, fiber optics, Compact Disc Read-Only Memories (CD-ROMs), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes back-end components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such back-end components, middleware components, and front-end components. The components of the system may be interconnected by any form or medium of digital data communication (e.g., a communication network). The communication network may include, for example, a Local Area Network (LAN), a Wide Area Network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

The above specific implementations do not constitute a limitation on the protection scope of the invention. Those skilled in the art should understand that various modifications, combinations, sub-combinations and substitutions can be made according to design requirements and other factors.

## Claims

1. An online file editing method, performed by a client, comprising:
in response to an opening request for a target file, sending (S301) a data acquisition request for the target file to a server;
receiving (S302) a data entity of the target file returned by the server, wherein the data entity comprises a plurality of pieces of log data;
loading (S303) the data entity in a preset web view container, and displaying a web view loaded with the data entity; and
receiving (S304) an editing instruction for the web view, displaying response result data in the web view in response to the editing instruction, and sending the response result data to the server for the server to update the data entity of the target file according to the response result data.

2. The method of claim 1, further comprising:
in response to a file creation request, sending (S201) the file creation request to the server, wherein the file creation request comprises a user identifier, ID; and
receiving (S202) a file ID of the target file returned by the server in a case where the server successfully generates the data entity.

3. The method of claim 2, wherein in response to the file creation request, sending the file creation request to the server, comprises:
for a video being watched by a user, receiving a triggering operation of the user for a preset function in a preset function area of a video display interface, and generating the file creation request for the watched video; and
in response to the file creation request, sending the file creation request to the server, wherein the file creation request further comprises a video ID.

4. The method of any one of claims 1-3, wherein the editing instruction comprises at least one of: an instruction for inserting attachments, an instruction for modifying content or an artificial intelligence, AI, editing instruction.

5. The method of claim 4, wherein in a case that the editing instruction is the AI editing instruction, receiving the editing instruction for the web view, displaying the response result data in the web view in response to the editing instruction, and sending the response result data to the server comprise:
receiving the AI editing instruction for the web view, and displaying a display interface containing a plurality of AI editing functions;
obtaining a selection instruction from a user for the AI editing function, obtaining and displaying AI response data by calling a corresponding functional interface according to a selection result; and
in a case of receiving an instruction from the user to confirm use of the AI response data, displaying the AI response data in the web view, and sending the AI response data to the server.

6. The method of claim 5, wherein the AI editing instruction is a text instruction or a voice instruction; and
in a case where the AI editing instruction is the voice instruction, the method further comprises:
performing intention recognition on the voice instruction, and determining a result of the intention recognition as the AI editing instruction.

7. The method of claim 5, wherein the AI editing function comprises at least one of: outline writing, brainstorming, text polishing, text abbreviation, text continuation, text expansion or summarization.

8. The method of any one of claims 1-7, further comprising:
in response to an operation instruction for the target file, sending the operation instruction to the server, wherein the operation instruction comprises an operation ID of an operation performed on the target file; and
receiving result information returned by the server in a case of the server responding to the operation instruction by calling a corresponding operation interface based on the operation ID.

9. The method of claim 8, wherein the operation instruction comprises at least one of: downloading, sharing, transferring, exporting, printing, moving, copying, favoriting or deleting.

10. An online file editing method, performed by a server, comprising:
receiving (S801) a data acquisition request for a target file sent by a client, wherein the data acquisition request comprises a user identifier, ID, and a file ID of the target file;
determining (S802) a data entity corresponding to the target file based on the user ID, the file ID, and a correspondence relationship among the user ID, the file ID and a data ID of the data entity, wherein the data entity comprises a plurality of pieces of log data;
sending (S803) the data entity to the client; and
receiving (S804) response result data sent by the client, and updating the data entity corresponding to the target file by using the response result data.

11. The method of claim 10, further comprising:
receiving a file creation request sent by the client, wherein the file creation request comprises a user ID;
generating the data entity corresponding to the file creation request, and storing the data entity in a target database;
generating a target file of a preset file type for the data entity, and storing the target file in a preset position;
allocating the data ID for the data entity and the file ID for the target file, establishing and storing the correspondence relationship among the user ID, the file ID and the data ID; and
in a case where the data entity and the target file are successfully generated, returning the file ID of the target file to the client;
optionally, wherein receiving the file creation request sent by the client, comprises:
receiving the file creation request for a watched video sent by the client, wherein the file creation request further comprises a video ID;
wherein establishing and storing the correspondence relationship among the user ID, the file ID and the data ID, comprises:
establishing and storing a correspondence relationship among the user ID, the video ID, the file ID and the data ID; and
wherein storing the target file in the preset position, comprises:
storing the target file in a storage directory of the watched video.

12. The method of any one of claims 10-11, further comprising:
receiving an operation instruction for the target file sent by the client, wherein the operation instruction comprises an operation ID of an operation performed on the target file; and
calling a corresponding operation interface based on the operation ID to respond to the operation instruction, and returning result information to the client.

13. An online file editing apparatus, configured in a client, comprising:
a first request sending module (1001), configured to, in response to an opening request for a target file, send a data acquisition request for the target file to a server;
a data obtaining module (1002), configured to receive a data entity of the target file returned by the server, wherein the data entity comprises a plurality of pieces of log data;
a data loading module (1003), configured to load the data entity in a preset web view container, and display a web view loaded with the data entity; and
an online editing module (1004), configured to, receive an editing instruction for the web view, display response result data in the web view in response to the editing instruction, and send the response result data to the server for the server to update the data entity of the target file according to the response result data.

14. An online file editing apparatus, configured in a server, comprising:
a first request receiving module (1101), configured to receive a data acquisition request for a target file sent by a client, wherein the data acquisition request comprises a user identifier, ID, and a file ID of the target file;
a data determining module (1102), configured to determine a data entity corresponding to the target file based on the user ID, the file ID, and a correspondence relationship among the user ID, the file ID and a data ID of the data entity, wherein the data entity comprises a plurality of pieces of log data;
a data sending module (1103), configured to send the data entity to the client; and
a data updating module (1104), configured to receive response result data sent by the client, and update the data entity corresponding to the target file by using the response result data.

15. A non-transitory computer readable storage medium having computer instructions stored thereon, wherein the computer instructions are used to cause a computer to perform the method of any one of claims 1-12.
